# EUROPEAN PATENT APPLICATION

(11) **EP 4 708 617 A1**
(43) Date of publication of application: **11.03.2026**
(21) Application number: 25199014.9
(22) Date of filing: 29.08.2025
(51) Int. Cl.: H02J 7/00, F24F 11/88, H02J 50/00, H02J 7/70

(54) **CLIMATE CONTROLLED TRANSPORTATION-RELATED REPLACEABLE BATTERIES**

(30) Priority: 30.08.2024 US 202418821469
(71) Applicant: Thermo King LLC, Minneapolis, MN 55420 (US)
(72) Inventor: STROUD, Adam, Minneapolis, Minnesota, 55420 (US); SCHUMACHER, Ryan Wayne, Minneapolis, Minnesota, 55420 (US); WANG, Xiaorui, Minneapolis, Minnesota, 55420 (US)
(74) Representative: Haseltine Lake Kempner LLP

(57) **Abstract**

A power system for a transport climate control system includes a battery pack that is capable of being removably attached to a chassis of the transport unit to which a transport climate control system may be disposed. A pair of wireless power transfer assemblies allows for wireless power transfer between the battery pack and the transport unit or a standalone charging bank. A power distribution unit corresponding to the transport climate control system conductively receives DC power from the vehicle-side wireless power transfer assembly and transmits the DC power to electrical components corresponding to the transport climate control system. Likewise, the power distribution unit distributes power from standard plug-in charging equipment to the wireless power transfer assembly such that at least one wireless battery pack can be charged wirelessly while on the transport unit. The battery pack can be removed for recharging and replaced at least temporarily.

## Description

### TECHNICAL FIELD

This disclosure generally relates to the provision of power and data for a transport climate control system.

### BACKGROUND

A transport climate control system is generally used to control an environmental condition (e.g., temperature, humidity, air quality, and the like) within a transport unit (e.g., a container (such as a container on a flat car, an intermodal container, etc.), a truck, a box car, or other similar transport unit). Climate controlled transport units are commonly used to transport perishable items such as produce, frozen foods, and meat products. Climate controlled transport units are also used to transport passengers between locations.

The transport climate control system includes a climate control unit ("CCU") that is attached to the transport unit to control one or more environmental conditions (e.g., temperature, humidity, atmosphere, etc.) of a particular space (e.g., a cargo space, a passenger space, etc.) (generally referred to as an "internal space"). referred to as an "internal space"). The can CCU include multiple components (e.g., a compressor, one or more fans or blowers, a controller, solenoid valve(s), etc.) that require power in order to operate.

Typically, significant investment and space are required to locate adequate charging equipment used for a transport climate control system in spaces corresponding to docks or bays at which a transport unit is loaded and/or unloaded. Further, and, more significantly, the lack of such charging equipment and/or time inefficiencies associated with charging may put cargo, particularly perishables, at risk of, *e.g.,* spoilage.

### SUMMARY

The embodiments described herein relate to the provision of power and data for a transport climate control system.

In one example embodiment, a power system for powering a transport climate control system (TCS) that is configured to provide climate control within a climate-controlled space of a transport unit includes a wireless battery pack that is configured to house a battery that is capable of being removed from and attached to a chassis of the transport unit. The power system also includes a wireless power transfer assembly that receives wirelessly induced AC power from the battery pack and converts the received AC power to DC power for distribution. The power system further includes a power distribution unit corresponding to the TCS that conductively receives DC power from the wireless power transfer assembly of the transport unit and conductively distributes the DC power to electrical components corresponding to the transport climate control system.

In accordance with at least one other example embodiment, a method implemented in connection with a transport climate control system includes attaching a replaceable wireless battery pack to a transport unit, converting DC power from a battery within the wireless battery pack to low-frequency AC power; inducing wireless power transfer from the wireless battery pack to a power transfer assembly on the transport unit; converting the induced AC power to DC power in the power transfer assembly of the transport unit; transferring the DC power from the power transfer assembly to a power distribution unit corresponding to the TCS; conductively receiving the DC power transferred from the power transfer assembly at the power distribution unit; and transferring the received DC power to electrical components corresponding to the TCS.

### BRIEF DESCRIPTION OF THE DRAWINGS

In the detailed description that follows, embodiments are described as illustrations only since various changes and modifications will become apparent to those skilled in the art from the following detailed description. The use of the same reference numbers in different figures indicates similar or identical items.
FIG. 1A is a side prospective view of an example of a climate-controlled transport unit and a tractor for which at least one non-limiting example of transportation-related replaceable batteries may be implemented.
FIG. 1B is a cross-sectional view of an example of a climate-controlled transport unit for which at least one non-limiting example of transportation-related replaceable batteries may be implemented.
FIG. 1C is a side view of an example climate-controlled van for which at least one non-limiting example of transportation-related replaceable batteries may be implemented.
FIG. 1D is a partial side view of an example of a climate-controlled straight truck for which at least one non-limiting example of transportation-related replaceable batteries may be implemented.
FIG. 1E is a front prospective view of an example of a climate-controlled mass-transit vehicle for transporting passengers for which at least one non-limiting example of transportation-related replaceable batteries may be implemented.
FIG. 2A shows a replaceable battery pack in accordance with at least one non-limiting example embodiment of transportation-related replaceable batteries.
FIG. 2B shows a replaceable battery pack in accordance with at least one other non-limiting example embodiment of transportation-related replaceable batteries.
FIG. 3A shows components utilized for inserting or attaching at least one non-limiting example of a transportation-related replaceable battery.
FIG. 3B shows an assembly example of a transportation-related replaceable battery, further to the non-limiting example of FIG. 3A.
FIG. 3C shows an example of securely clamping a transportation-related replaceable battery, further to the non-limiting examples of FIGS. 3A and 3B.
FIG. 4A shows a schematic diagram of a system by which at least one non-limiting example of a transportation-related replaceable battery may be implemented.
FIG. 4B shows a schematic diagram of a non-limiting example embodiment of the wireless battery depicted in FIG. 4A.
FIG. 4C shows a schematic diagram of a non-limiting example embodiment of a replaceable battery that transfers power conductively.
FIG. 4D shows a schematic diagram of a composite of the example embodiments of FIGS. 4B and 4C.
FIG. 5A shows a schematic diagram of a system by which charging of at least one non-limiting example of a transportation-related replaceable battery may be implemented.
FIG. 5B shows a schematic diagram of a system by which charging of at least one other non-limiting example of a transportation-related replaceable battery may be implemented.
FIG. 5C shows a schematic diagram of a system by which charging of yet another non-limiting example of a transportation-related replaceable battery may be implemented.
FIG. 6 shows a flowchart of a methodology for implementing transportation-related replaceable batteries, in accordance with embodiments described and recited herein.

### DETAILED DESCRIPTION

The embodiments described herein relate to the provision of power and data for a transport climate control system (TCS).

In the following detailed description, reference is made to the accompanying drawings, which form a part of the description. In the drawings, similar symbols typically identify similar components, unless context dictates otherwise. Furthermore, unless otherwise noted, the description of each successive drawing may reference features from one or more of the previous drawings to provide clearer context and a substantive explanation of the current example embodiment. Still, the example embodiments described in the detailed description, drawings, and claims are not intended to be limiting. Other embodiments may be utilized, and other changes may be made, without departing from the spirit or scope of the subject matter presented herein. It will be readily understood that the aspects of the present disclosure, as generally described and recited herein, as well as illustrated in the drawings, may be arranged, substituted, combined, separated, and designed in a wide variety of different configurations, all of which are explicitly contemplated herein.

Additionally, portions of the present disclosure may be described herein in terms of functional block components and various processing steps. It should be appreciated that such functional blocks may be realized by any number of hardware and/or software components configured to perform the specified functions.

In the present description and recitation, the following terms may be used, in addition to their accepted meaning, as follows.

Chassis, as referenced and recited herein, refers to a supporting frame, typically, for a trailer having a climate-controlled space that is conditioned by a transport climate control system (TCS). In the trucking industry, a chassis may refer to a semi-trailer onto which a cargo container is mounted for transport. Therefore, as referenced and recited herein, a chassis may be disposed on the underside of a van, straight-truck, tractor, climate-controlled transport unit, trailer, *etc.* However, the embodiments are not limited to the underside, as set forth above. The embodiments described and recited herein may contemplate attachments, railings, *etc.,* disposed on an exterior sidewall of the embodiments described above or even an interior surface thereof, so long as such surface is accessible by machinery as described and/or recited further below.

Swappable and/or replaceable, as referenced and/or recited herein may be used to describe a component, e.g., rechargeable battery and/or battery pack to store a rechargeable battery, that may be inserted, attached, or otherwise connected to a structure, e.g., chassis; utilized; and then removed, detached, or otherwise disconnected from the structure. Once removed, detached, or disconnected, the component may be replaced by another like component or be re-inserted, re-attached, or re-connected to the structure after, *e.g.,* recharging.

Wireless power, as referenced and recited herein, refers to power in the form of electric fields, magnetic fields, electromagnetic fields, *etc.,* that is capable of being sent or transmitted by a transmitter and received by a power distribution unit without requiring physical conductors between the transmitter and power distribution unit. As further referenced and recited herein, wireless power transmission refers to the wireless transfer of power from a battery to an electrical component; and wireless power reception refers to wireless charging of a battery, *i.e.,* the electrochemical cells of the battery. However, as referenced and recited herein, a battery that is configured or otherwise capable of receiving and/or transmitting, *i.e.,* transceiving, power wirelessly is not so limited; that is, in accordance with at least some of the non-limiting example battery embodiments described and recited herein, such batteries may also transmit power via one or more physical conductors and/or may also receive power to recharge the electrochemical cells therein via one or more physical conductors.

Bidirectional Wireless Power Transfer (BWPT) may be applicable to the references and recitations herein of wireless power. BWPT refers to a technology by which power is transferred without utilizing physical connectors, but rather utilizes inductive coupling between coils of wire, which may be referred to as antenna throughout this disclosure and recitation. As disclosed by Ye, W.; Parspour, N. A; Bidirectional Wireless Power Transfer System with Integrated Near-Field Communication for E-Vehicles. Vehicles 2024, 6, 256-274. https://doi.org/10.3390/vehicles6010011, wireless power transfer (WPT) systems typically include wireless information transfer (WIT) to continuously send back a battery status, e.g., charging phase, voltage, and required power, to adjust control parameters of electronic components on the transmitting and receiving ends in real time.

The embodiments described and/or recited herein are generally directed to the provision of power and data for a transport climate control system.

In the following detailed description, reference is made to the accompanying drawings, which illustrate embodiments in which the invention may be practiced. These embodiments are described in sufficient detail to enable those skilled in the art to practice what is claimed, and it is to be understood that other embodiments may be utilized without departing from the spirit and the scope of the claims. The following detailed description and the accompanying drawings, therefore, are not to be taken in a finite sense.

Different types of goods/cargo may require storage at specific environmental condition(s) while being stored within a transport unit. For example, perishable goods may need to be stored within a specific temperature range to prevent spoilage and liquid goods may require storage at a temperature above their respective freezing points. Also, goods having electronic components may require storage in environmental conditions having a measurably low humidity to avoid damage to their electronic components. Passengers traveling in the transport unit may desire or even require transport in a climate-controlled space having specific environmental condition(s), e.g., temperature and/or humidity, to ensure their comfort while traveling. Accordingly, a transport climate control system may blow conditioned air into the climate-controlled space of the transport unit to keep the air within the climate-controlled space at the desired environmental conditions.

A transport unit or a tractor that tows the transport unit may have electronic component(s) that are temperature-sensitive and/or generate significant heat while operating. As an example of such an electronic component, a transport unit may include a battery that generates significant heat when being discharged and/or charged. A non-component example that still requires regulation of one or more environmental conditions, a transport unit or a tractor that tows the transport unit may have an operator space for an operator that operates the transport unit and/or tractor and, therefore, requires such regulation.

The embodiments described and/or recited herein are generally directed to the provision of power and data for a transport climate control system. In some embodiments, a climate control circuit is provided that includes a main heat transfer circuit and a chiller heat transfer circuit.

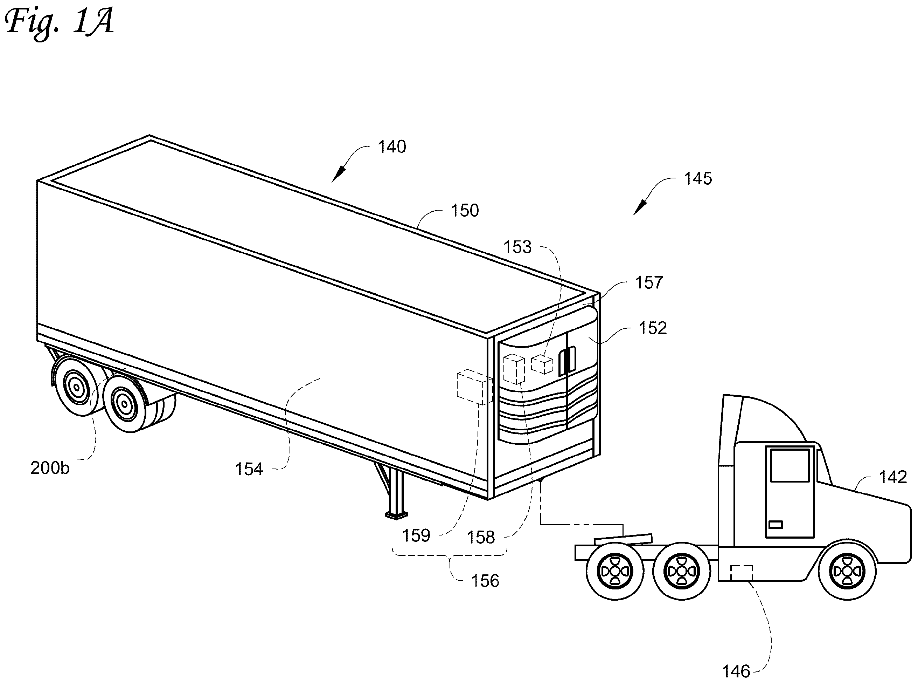

The embodiments described and recited herein include, but are not limited to, a swappable or replaceable wireless battery pack that is configured, designed, or otherwise capable of transferring data and power back-and-forth with, for example, a controller of a transport climate control system. The wireless battery pack, which has a battery inserted therein or otherwise attached thereto, is configured, designed, or otherwise capable of being installed on, removed from, or otherwise swapped in connection with, a transport unit, including but not limited to those described below with regard to FIGS. 1A - 1E. The installation, removal, or swapping of one or more of the wireless batteries may be facilitated by machinery, e.g., forklift, in a distribution center environment; and further reduces, or even eliminates, a need or demand for fast-charging batteries for a transport climate control system, thus reducing or even eliminating a need or demand for complicated and/or expensive battery cooling systems.

That is, by utilizing batteries that are capable of being swapped in-and-out in a rapid and efficient manner, a transport climate control system, and/or the transport unit, may receive a fully or near-fully charged battery in a matter of minutes without being tethered to a charging facility. As a result, the embodiments described and recited herein may be favorably considered for utilization in food distribution warehouses or other facilities in which the sustainability and/or preservation of perishable items within transport containers or units is dependent on rapid and efficient charging of power systems for transport climate control systems.

In accordance with at least one embodiment, a transport climate control system may be configured or otherwise capable of utilizing bidirectional wireless power transfer (WPT) for lower power needs and a mounted inner-TCS battery for high-power charge/discharge as well as transient holdover power when a replaceable battery is absent from the TCS.

An inner-TCS battery, *i.e.,* buffer battery, may be configured or otherwise be capable of providing and absorbing high currents found in a TCS; that is, currents that are higher than those that are able to be transferred wirelessly. High discharge currents are needed to pull down temperatures in a transport container, see *e.g.,* FIGS. 1A - 1E; or if there is an e-Axle on the chassis, regenerative braking requires high-charging currents. The inner-TCS battery may be further configured or otherwise be capable of providing power to the TCS for extended time periods, ranging from several minutes to several hours, while a replaceable battery is absent or otherwise unable to provide power to at least one of the TCS or transport unit. In some embodiments, the inner-TCS battery may be disposed within a climate control unit (CCU) of the TCS.

As described and/or recited herein, a battery pack that is configured or otherwise capable of being inserted and/or removed, *i.e.,* swapped, may be mechanically inserted, attached, or mounted on a chassis for a corresponding TCS or transport unit. As a non-limiting example, a forklift may be utilized for the swapping operation.

As described and/or recited herein, a battery pack that is configured or otherwise capable of being inserted and/or removed, *i.e.,* swapped, may have an integral human machine interface (HMI) that allows for quick visual identification of state of charge or other diagnostic messages, which facilitates efficient and prudent decisions for swapping out a battery pack or keeping the battery pack as currently installed.

In accordance with at least one embodiment described and recited herein, a shelf array may be provided to accommodate one or more replaceable battery packs to facilitate charging of battery packs, simultaneously in the case of multiple shelved battery packs.

FIG. 1A illustrates one embodiment of a climate-controlled transport unit 140 that may or may not be connected to a tractor 142. The climate-controlled transport unit 140 includes a transport climate control system 145 for a transport unit 150. The tractor 142 is attached to and is configured to tow the transport unit 150. The transport unit 150 shown in FIG. 1A is a trailer.

The transport climate control system 145 includes a CCU 152 that provides environmental control (e.g. temperature, humidity, air quality, etc.) within a climate-controlled space 154 of the transport unit 150. The CCU 152 is disposed on a front wall 157 of the transport unit 150. In other embodiments, it will be appreciated that the CCU 152 may be disposed, for example, on a rooftop or another wall of the transport unit 150. The CCU 152 includes a climate control circuit (not shown) that connects, for example, a compressor, a condenser, an evaporator and an expansion device to provide conditioned air within the climate-controlled space 154.

The tractor 142 may include a second climate-controlled space 144. The second climate-controlled space 144 may be an operator compartment of the tractor 142 (e.g., a cabin, etc.). For example, the second climate-controlled space 144 may accommodate an operator of the tractor 142 when operating the tractor 142 (e.g., driving, etc.). In an embodiment, the transport climate control system 145 may be configured to provide climate control to the second climate-controlled space 144.

The tractor 142 may include a battery 139 that is a power source for operating the tractor 142 and/or for the transport climate control system 145. In an embodiment, the tractor 142 may also include an engine (not shown) as a power source. The tractor 142 may be a hybrid vehicle that uses a combination of battery power and engine power or an electric vehicle that does not include an engine.

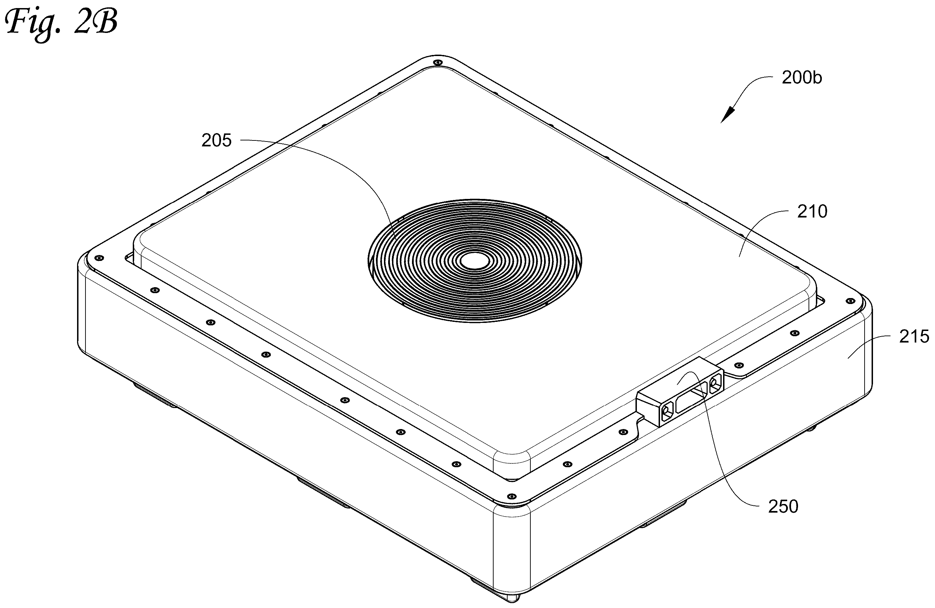

The climate-controlled transport unit 140 may include replaceable battery 200b (described with reference to Fig. 2B), as well as an auxiliary battery 153 that is a supplemental power source for the transport climate control system 145. The transport climate control system 145 may include a hybrid power system that uses a combination of battery power and engine power or an electric power system that does not include or rely upon an engine (not shown) of climate-controlled transport unit 140 or the tractor 142 for power. The replaceable battery 200b is disposed underneath the trailer between, e.g., the rear wheels and landing gear, and auxiliary battery 153 in FIG. 1A is located within the CCU 152. In an embodiment, the transport climate control system 145 may be configured to provide climate control to the battery 146 and/or the battery 153.

The transport climate control system 145 also includes a programmable climate controller 156 and one or more sensors (not shown) that are configured to measure one or more parameters of the transport climate control system 145 (e.g., an ambient temperature outside of the transport unit 150, an ambient humidity outside of the transport unit 150, a compressor suction pressure, a compressor discharge pressure, a supply air temperature of air supplied by the CCU 152 into the climate-controlled space 154, a return air temperature of air returned from the climate-controlled space 154 back to the CCU 152, a humidity within the climate-controlled space 154, a temperature of the battery 146, a temperature of the auxiliary battery 153, a temperature of the second climate-controlled space 144, etc.) and communicate parameter data to the climate controller 156. The climate controller 156 is configured to control operation of the transport climate control system 145 including components of the climate control circuit. The climate controller 156 may comprise a single integrated control unit 158 or may comprise a distributed network of climate controller elements 158, 159. The number of distributed control elements in a given network may depend upon the particular application of the principles described herein.

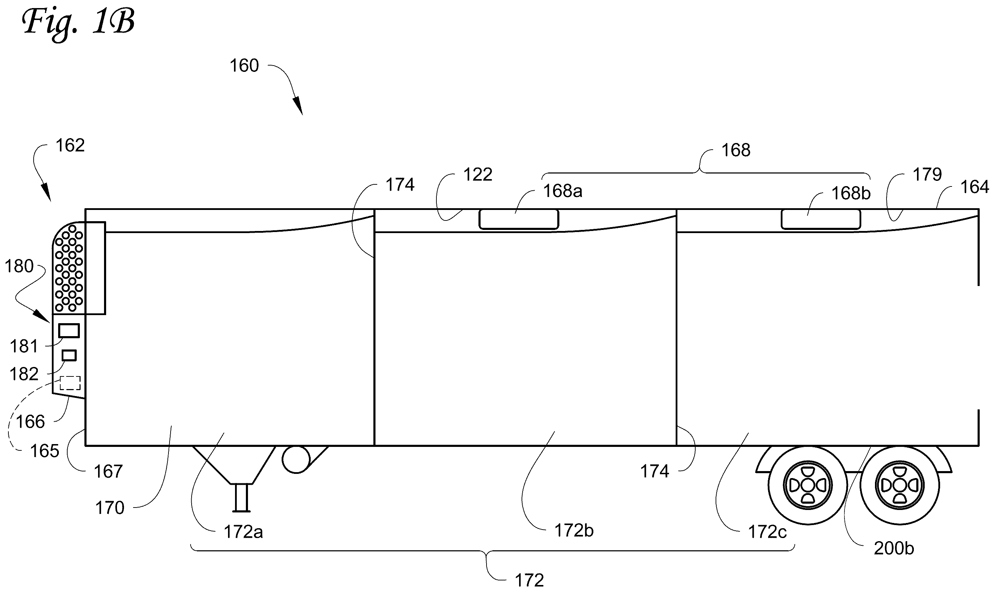

FIG. 1B illustrates another embodiment of a climate-controlled transport unit 160. The climate-controlled transport unit 160 includes a multi-zone transport climate control system (MTCS) 162 for a transport unit 164 that may be towed, for example, by a tractor (e.g., the tractor 142 in FIG. 1A). It will be appreciated that the embodiments described and/or recited herein are not limited to tractor and trailer units, but may apply to any type of transport unit (e.g., a truck, a container (such as a container on a flat car, an intermodal container, a marine container, etc.), a box car, a semi-tractor, a bus, or other similar transport unit), etc.

The MTCS 162 includes a CCU 166 and a plurality of remote units 168 that provide environmental control (e.g. temperature, humidity, air quality, etc.) within a climate-controlled space 170 of the transport unit 164. The climate-controlled space 170 may be divided into a plurality of zones 172. The term "zone" means a part of an area of the climate-controlled space 170 separated by walls 174. The CCU 166 may operate as a host unit and provide climate control within a first zone 172a of the climate-controlled space 170. The remote unit 168a may provide climate control within a second zone 172b of the climate-controlled space 170. The remote unit 168b may provide climate control within a third zone 172c of the climate-controlled space 170. Accordingly, the MTCS 162 may be used to separately and independently control environmental condition(s) within each of the multiple zones 172 of the climate-controlled space 170.

The CCU 166 is disposed on a front wall 167 of the transport unit 160. In other embodiments, it will be appreciated that the CCU 166 may be disposed, for example, on a rooftop or another wall of the transport unit 160. The CCU 166 includes a climate control circuit (not shown) that connects, for example, a compressor, a condenser, an evaporator and an expansion device to provide conditioned air within the climate-controlled space 170. The remote unit 168a is disposed on a ceiling 179 within the second zone 172b and the remote unit 168b is disposed on the ceiling 179 within the third zone 172c. Each of the remote units 168a,b include an evaporator (not shown) that connects to the rest of the climate control circuit provided in the CCU 166.

The climate-controlled transport unit 160 may include a battery 165 that is a power source for the MTCS 162. In an embodiment, the CCU 166 may also include an engine (not shown) as a power source. The MTCS 162 may include a hybrid power system that uses a combination of battery power and engine power or an electric system that does not include or rely upon an engine (not shown) of the climate-controlled transport unit 162 or the tractor for power. The battery 165 in FIG. 1B is part of the MTCS 162. However, it should be appreciated that the battery 165 in an embodiment may be located outside of the MTCS 162. In such an embodiment, the battery 165 may be, for example, attached to the underside of the climate-controlled transport unit 160. In an embodiment, the MTCS 162 may be configured to provide climate control to the battery 162, a second climate-controlled space in the tractor that tows the climate-controlled transport unit 160 (e.g., second climate-controlled space 144), and/or a battery of the tractor (e.g., battery 146), etc.

The MTCS 162 also includes a programmable climate controller 180 and one or more sensors (not shown) that are configured to measure one or more parameters of the MTCS 162 (e.g., an ambient temperature outside of the transport unit 164, an ambient humidity outside of the transport unit 164, a compressor suction pressure, a compressor discharge pressure, supply air temperatures of air supplied by the CCU 166 and the remote units 168 into each of the zones 172, return air temperatures of air returned from each of the zones 172 back to the respective CCU 166 or remote unit 168a or 168b, a humidity within each of the zones 118, a temperature of the battery 146, a temperature of a battery of the tractor, a temperature of the second climate-controlled space in the tractor, etc.) and communicate parameter data to a climate controller 180. The climate controller 180 is configured to control operation of the MTCS 162 including components of the climate control circuit. The climate controller 180 may comprise a single integrated control unit 181 or may comprise a distributed network thereof. The number of distributed control elements in a given network may depend upon the particular application of the principles described herein.

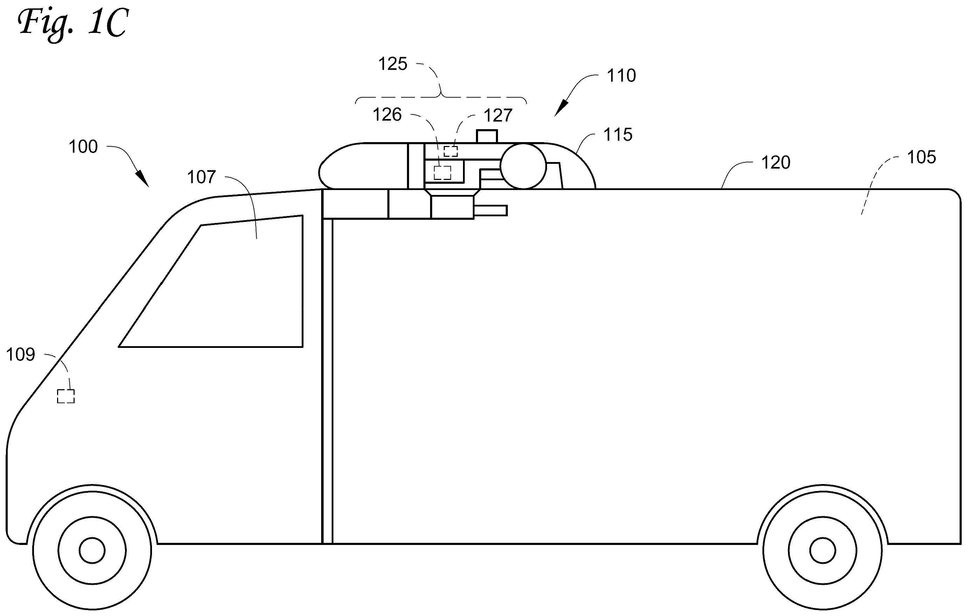

FIG. 1C illustrates one embodiment of a climate-controlled van 100 that includes a climate-controlled space 105 for carrying cargo and a transport climate control system 110 for providing climate control within the climate-controlled space 105. The transport climate control system 110 includes a climate control unit (CCU) 115 that is mounted to a rooftop 120 of the van 100. The transport climate control system 110 may include, amongst other components, a climate control circuit (not shown) that connects, for example, a compressor, a condenser, evaporator(s) and an expansion device to provide climate control within the climate-controlled space 105.

The climate-controlled van 100 may include a second climate-controlled space 107. The second climate-controlled space 107 may be an operator compartment of the climate-controlled van 100 *(e.g.,* a cabin, etc.). For example, the second climate-controlled space 107 accommodates an operator when operating (e.g., driving, etc.) the climate-controlled van 100. In an embodiment, the transport climate control system 110 may be configured to also provide climate control to the second climate-controlled space 107.

The climate-controlled van 100 may include a battery pack (not shown in FIG. 1A) attached to an undercarriage or chassis of the van 100 that is a power source for operating the climate-controlled van 100 and/or for transport climate control system 110. In an embodiment, the climate-controlled van 100 may also include an engine (not shown) as a power source. The climate-controlled van 100 may be a hybrid vehicle that uses a combination of battery power and engine power or an electric vehicle that does not include an engine. The transport climate control system 110 may include a hybrid power system that uses a combination of battery power and engine power, or an electric power system that does not include or rely upon an engine (not shown) of the climate-controlled van 100 for power. The wireless battery pack corresponding to the van shown in FIG. 1C is located outside CCU 115.

It will be appreciated that the embodiments described and/or recited herein are not limited to climate-controlled vans, but may apply to any type of transport unit (e.g., a truck, a container (such as a container on a flat car, an intermodal container, a marine container, etc.), a box car, a semi-tractor, a bus, or other similar transport unit), etc.

The transport climate control system 110 also includes a programmable climate controller 125 and one or more sensors (not shown) that are configured to measure one or more parameters of transport climate control system 110 (e.g., an ambient temperature outside of the van 100, an ambient humidity outside of the van 100, a compressor suction pressure, a compressor discharge pressure, a supply air temperature of air supplied by the CCU 115 into the climate-controlled space 105, a return air temperature of air returned from the climate-controlled space 105 back to the CCU 115, a humidity within the climate-controlled space 105, a temperature of the wireless battery pack, a temperature of the second climate-controlled space 107, etc.) and communicate parameter data to the climate controller 125. The climate controller 125 is configured to control operation of transport climate control system 110 including the components of the climate control circuit. The climate controller 115 may comprise a single integrated control unit 126 or may comprise a distributed network of climate controller elements 126, 127. The number of distributed control elements in a given network may depend upon the particular application of the principles described herein.

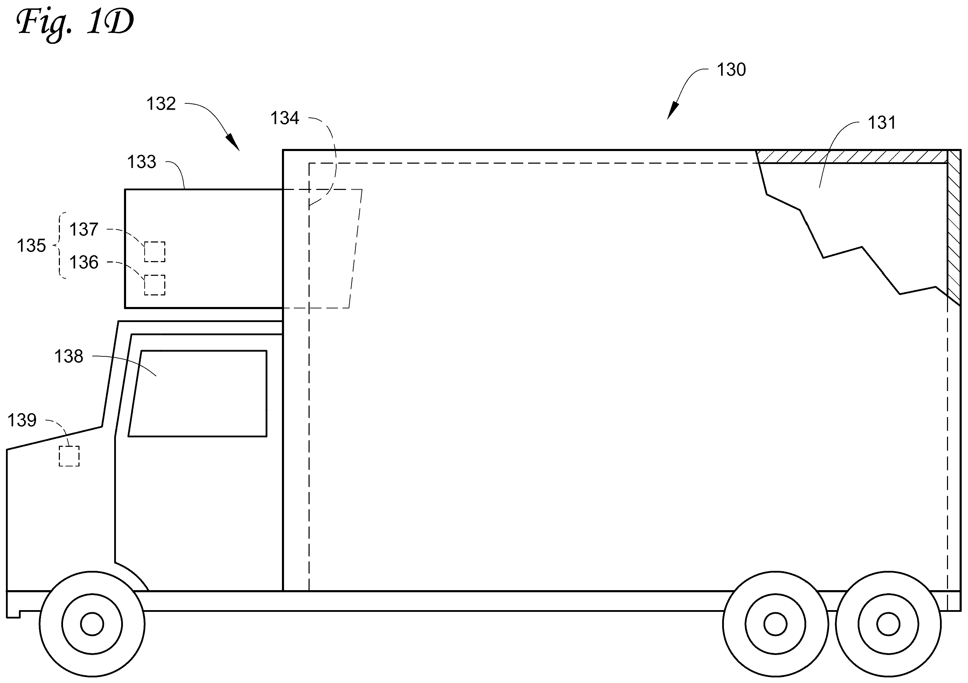

FIG. 1D illustrates one embodiment of a climate-controlled straight truck 130 that includes a climate-controlled space 131 for carrying cargo and a transport climate control system 132. The transport climate control system 132 includes a CCU 133 that is mounted to a front wall 134 of the climate-controlled space 131. The CCU 133 may include, amongst other components, a climate control circuit (not shown) that connects, for example, a compressor, a condenser, an evaporator and an expansion device to provide climate control within the climate-controlled space 131.

The climate-controlled straight truck 130 may include a second climate-controlled space 138. The second climate-controlled space 138 may be an operator compartment of the climate-controlled straight truck 130 (e.g., a cabin, etc.). For example, the second climate-controlled space 138 may accommodate an operator of the climate-controlled straight truck 130 when operating the climate-controlled straight truck 130 (e.g., driving, etc.). In an embodiment, the transport climate control system 132 may be configured to provide climate control to the second climate-controlled space 138.

The climate-controlled straight truck 130 may include a battery pack 200b (described with reference to FIG. 2B) that is attached to the undercarriage or chassis of the truck 130 that is a power source for operating climate-controlled straight truck 130 and/or for the transport climate control system 132. In an embodiment, the climate-controlled straight truck 130 may also include an engine (not shown) as a power source. The climate-controlled straight truck 130 may be a hybrid vehicle that uses a combination of battery power and engine power or an electric vehicle that does not include an engine. The transport climate control system 132 may include a hybrid power system that uses a combination of battery power and engine power or an electric power system that does not include or rely upon an engine (not shown) of the climate-controlled straight truck 130 for power. The wireless battery pack for truck 130 in FIG. 1D is located outside the CCU 133.

The transport climate control system 132 also includes a programmable climate controller 135 and one or more sensors (not shown) that are configured to measure one or more parameters of the transport climate control system 132 (e.g., an ambient temperature outside of the truck 130, an ambient humidity outside of the truck 130, a compressor suction pressure, a compressor discharge pressure, a supply air temperature of air supplied by the CCU 133 into the climate-controlled space 131, a return air temperature of air returned from the climate-controlled space 131 back to the CCU 133, a humidity within the climate-controlled space 131, a temperature of the battery 139, a temperature of the second climate-controlled space 138, etc.) and communicate parameter data to the climate controller 135. The climate controller 135 is configured to control operation of the transport climate control system 132 including components of the climate control circuit. The climate controller 135 may comprise a single integrated control unit 136 or may comprise a distributed network of climate controller elements 136, 137. The number of distributed control elements in a given network may depend upon the particular application of the principles described herein.

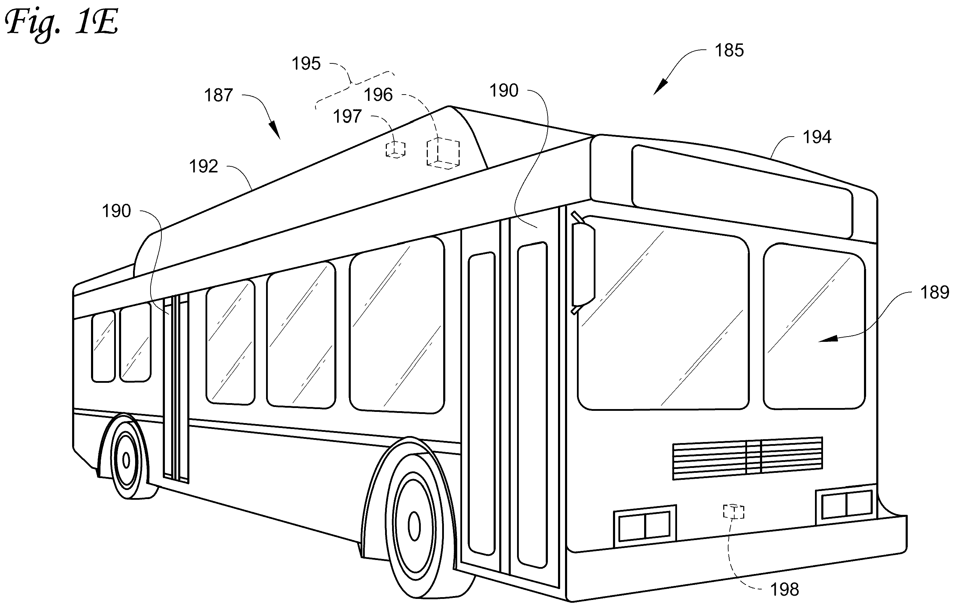

FIG. 1E is a perspective view of a mass-transit vehicle 185 including a transport climate control system 187, according to one embodiment. The vehicle 185 is a mass-transit bus that may carry passenger(s) (not shown) to one or more destinations. In other embodiments, the vehicle 185 may be a school bus, railway vehicle, subway car, or other commercial vehicle that carries passengers. The vehicle 185 includes a climate-controlled space (e.g., passenger compartment) 189 supported that may accommodate a plurality of passengers. The vehicle 185 includes doors 190 that are positioned on a side of the vehicle 185. In the embodiment shown in Fig. 1E, first door 190 is located adjacent to a forward end of the vehicle 185, and a second door 190 is positioned towards a rearward end of the vehicle 185. Each door 190 is movable between an open position and a closed position to selectively allow access to the climate-controlled space 189. The transport climate control system 187 includes a CCU 192 attached to roof 194 of vehicle 185.

CCU 170 includes a climate control circuit (not shown) that connects, for example, a compressor, a condenser, an evaporator and an expansion device to provide conditioned air within the climate-controlled space 189.

The vehicle 185 may include a battery 198 that is a power source for operating the vehicle 185 and/or for the transport climate control system 187. In an embodiment, vehicle 185 may also include an engine (not shown) as a power source. The vehicle 185 may be a hybrid vehicle that uses a combination of battery power and engine power or an electric vehicle that does not include an engine. The transport climate control system 187 may include a hybrid power system that uses a combination of battery power and engine power or an electric power system that does not include or rely upon an engine (not shown) of the vehicle 185 for power. The battery 198 in FIG. 1E is located outside the CCU 192. However, it should be appreciated that battery 198 in an embodiment may be located in the CCU 192 and configured to supply power to the transport climate control system 187. In an embodiment, the transport climate control system 187 may be configured to provide climate control to battery 198.

The transport climate control system 187 also includes a programmable climate controller 195 and one or more sensors (not shown) that are configured to measure one or more parameters of the transport climate control system 187 (e.g., an ambient temperature outside of the vehicle 185, a space temperature within the climate-controlled space 189, an ambient humidity outside of the vehicle 185, a space humidity within the climate-controlled space 189, a temperature for the battery 198, etc.) and communicate parameter data to the climate controller 195. The climate controller 195 is configured to control operation of the transport climate control system 187 including components of the climate control circuit. The climate controller 195 may comprise a single integrated control unit 196 or may comprise a distributed network of climate controller elements 196, 197. The number of distributed control elements in a given network may depend upon the particular application of the principles described herein.

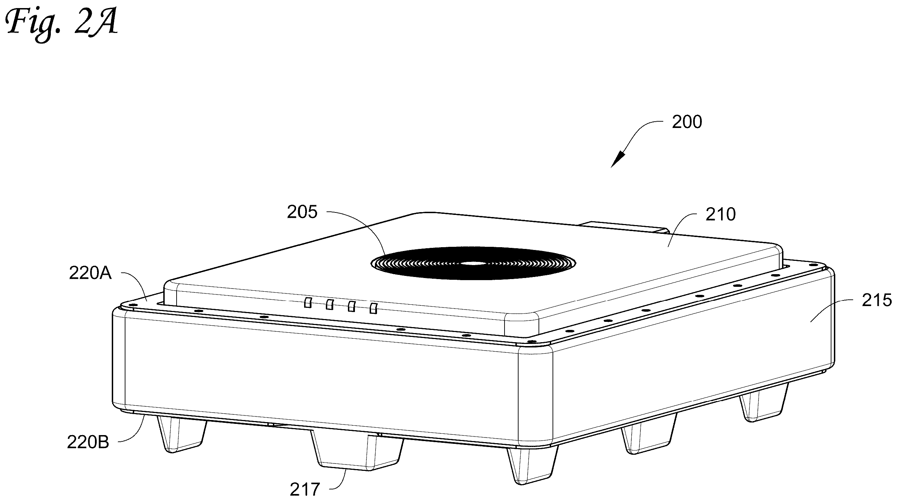

FIG. 2A shows a replaceable battery pack 200 in accordance with at least one non-limiting example embodiment of transportation-related replaceable batteries, as described and recited herein. As depicted in FIG. 2A, battery pack 200 includes at least antenna 205, electronics compartment 210, battery compartment 215, top-side sliding tracks 220A, bottom-side sliding tracks 220B, and bottom-side risers 217.

Battery pack 200 refers to a container made of a conductive, e.g., aluminum, or non-conductive material that is physically configured to permanently house a wireless, e.g., WPT, battery. However, in accordance with at least one non-limiting alternative embodiment, battery pack 200 has an opening by which a re-chargeable battery is inserted into the battery pack 200. The openings may be provided in a variety of ways including, but not limited to, a top lid opening, a side panel opening, a side-hinged opening, *etc.* Further, battery pack 200 are configured to be lightweight yet durable, and therefore can be manufactured with components from carbon fiber-reinforced plastic (CFRP) and/or glass fiber reinforced plastic (GFRP) to provide the rigidness and sturdiness required for sustainability, considering that battery pack 200 is likely exposed to environmental elements during usage. Such composition is not limiting, as the various embodiments of battery pack 200 that are described, recited, and otherwise suggested herein may be made of different materials, so long as the materials provide required durability and sustainability.

Antenna 205 refers to a coil or series of coils that provide high-efficiency power transfer from a battery that is inserted into or otherwise housed within battery pack 200 to a wireless power transfer assembly, which will be described further along herein. In accordance with at least one non-limiting example embodiment, antenna 205 includes separate and distinct coils that receive power from a charging station and/or that transmit power the battery housed within battery pack 200. Alternatively, for one or more other embodiments, antenna 205 includes coils that are designed and configured to both receive and transmit power, *i.e.,* transceive. Thus, antenna 205 facilitates wireless, non-conductive power transfer from battery pack 200 and, in accordance with some non-limiting example embodiments, wireless, non-conductive charging of a battery housed within battery pack 200.

Electronics compartment 210 refers to a portion or compartment of battery pack 200 that is affixed to or within battery pack 200 that is designed and/or configured to receive and/or house a battery management system that includes a bidirectional WPT conversion module that converts the DC power stored within the wireless battery pack 200 to AC power for wireless transmission to the wireless power transfer assembly, via antenna 205.

Battery compartment 215 refers to a portion of battery pack 200 that is designed and/or configured to receive and/or store a wireless, e.g., WPT, battery. As part of battery pack 200, battery compartment 215, in accordance with at least some non-limiting example embodiments, is manufactured with components from CFRP and/or GFRP to provide the rigidness and sturdiness required for sustainability, e.g., thermal management, corrosion resistance, and fire protection.

Risers 217 refer to extensions of the bottom surface of battery pack 200. Alternatively, risers 217 may refer to risers or pegs that are attached to the bottom surface of battery pack 200, as opposed to being formed or molded as part of the bottom surface. Regardless of the formation embodiment thereof, risers 217 provide sufficient space between the bottom surface of battery pack 200 and a top surface of a platform, e.g., pallet or charging rack, on which battery pack 200 is disposed. Thus, battery pack 200 is provided sufficient ventilation space between the bottom surface thereof and the platform and, further, sufficient space is provided for machinery, e.g., a forklift, to extend underneath battery pack 200 for insertion, attachment, or connection to a chassis or removal or detachment from the chassis.

Tracks 220A and 220B refer to beveled edges of battery pack 200 that enable battery pack 200 to be inserted into or attached to a chassis, as described and recited herein. In accordance with at least some non-limiting example embodiments, battery pack 200 includes parallel tracks 220B on a bottom surface thereof, though some embodiments include both tracks 220B and parallel tracks 220A on a top surface of pack 200. For those embodiments that include both parallel tracks 220B and parallel tracks 220A, tracks 220A and 220B extend along the same lengthwise direction of battery pack 200. In accordance with some non-limiting example embodiments, tracks 220A and 220B are composed of ultra-high molecular weight polyethylene (UMHW) plastic, though the composition of tracks 220A and 220B is not so limited. The material of which tracks 220A and 220B are composed is to be durable, produce low levels of friction, have a high level of moisture resistance, and be resistant to abrasion and corrosion.

FIG. 2B shows a replaceable battery pack 200b in accordance with at least one other non-limiting example embodiment of transportation-related replaceable batteries. Just as with the non-limiting example embodiment of FIG. 2A, battery pack 200b in FIG. 2B also includes, at least, antenna 205, electronics compartment 210, battery compartment 215, top-side sliding tracks 220A, bottom-side sliding tracks 220B, and bottom-side risers 217. In FIG. 2B, battery pack 200b further includes a rack and panel terminal power terminal 250 so that, in accordance with one non-limiting example implementation, battery pack 200b may be conductively charged by plugging in to a charging shelf array. That is, a charging shelf array (not shown) may include multiple charging ports, charging cords, *etc.,* that facilitate simultaneous charging of a plurality of battery packs 200b. In such a configuration, a charging port on a portion of a charging shelf array may conductively connect to power terminal 250 or a power cord corresponding to a charging shelf array may conductively plug into power terminal 250. The conductive charging, as described and recited herein, allows for more efficient usage of grid power than for wireless charging. Further, standalone battery charging racks allow battery pack 200b to be separated from the trailer and thus allow the logistics of loading and unloading cold perishable goods to proceed independently of charging the trailer.

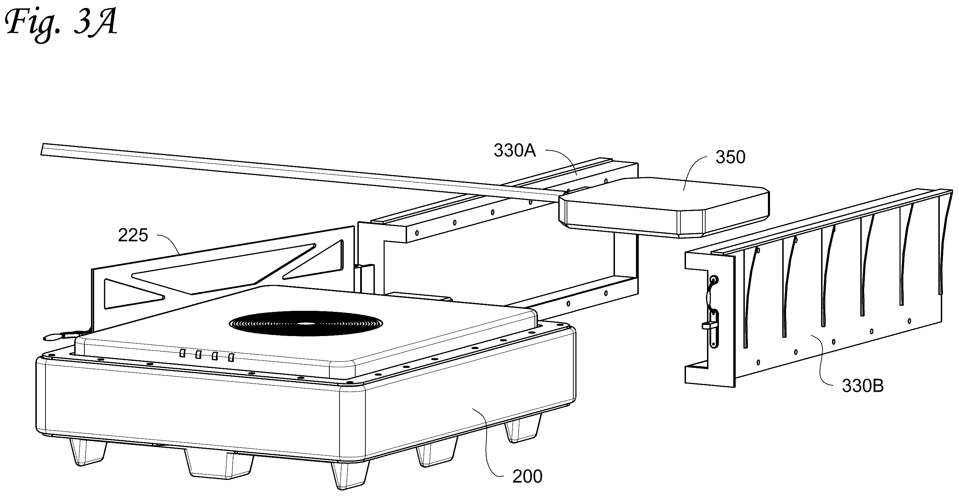

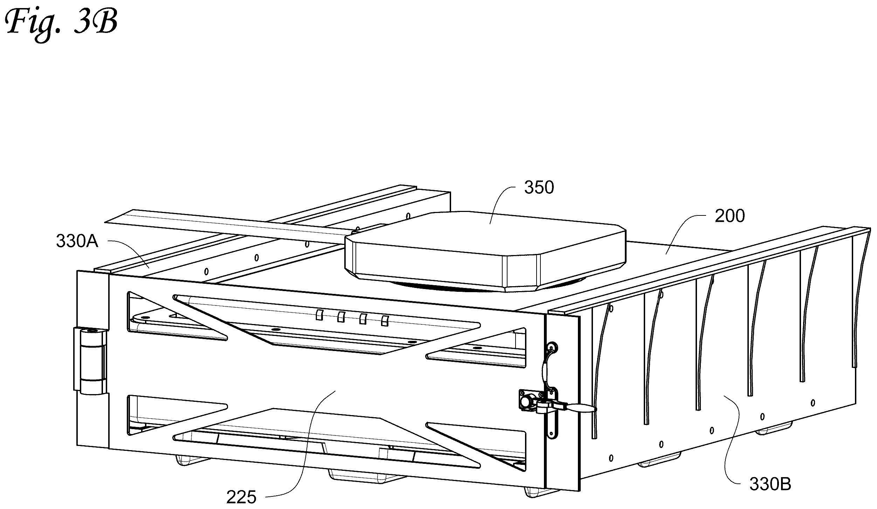

FIG. 3A shows components utilized for inserting or attaching at least one non-limiting example of a transportation-related replaceable battery, and FIG. 3B shows an assembly example of a transportation-related replaceable battery, further to the non-limiting example of FIG. 3A. As depicted in either or both of FIGS. 3A and 3B, the insertion into, attachment to, and/or connection of replaceable battery pack 200 with the chassis of a transport unit includes rails 330A and 330B, and removable gate 225.

FIG. 3A shows that, in accordance with at least some non-limiting example embodiments, top surfaces of rails 330A and 330B are fastenable to abut to a bottom surface of a chassis in a parallel manner such that top tracks 220A and 220B of battery pack 200 are guided by top-side guide portions of corresponding rails 330A and 330B; and bottom tracks 220A and 220B of the battery pack slide along a bottom portion of corresponding rails 330A and 330B.

FIG. 3B shows that, when battery pack 200 is lifted and fully inserted into an accommodating space created between parallel rails 330A and 330B by machinery, e.g., a forklift, gate 225 may be attached to distal portions of the rails to secure battery pack 200 therein by, at least, ensuring that the battery pack does not slide out from the rails. In accordance with at least one other non-limiting example embodiment, a forklift may be utilized to insert battery pack 200 to a push-push latching mechanism mounted underneath or on the chassis. Alternatively, an end wall in a receiving space on the chassis may have spring-loaded rollers attached thereto to properly align battery pack 200 in the receiving space when battery pack 200 is front-loaded into the receiving space between rails 330A and 330B.

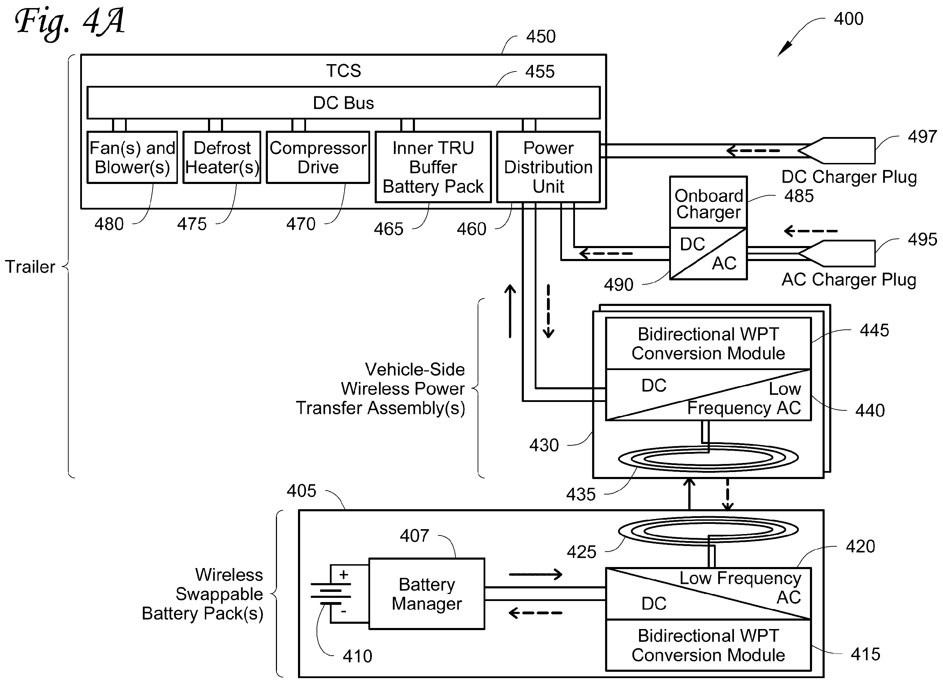

When battery pack 200 is fully inserted in the accommodating space, power transfer assembly 350, which is disposed on the chassis and includes at least a BWPT conversion module, is positioned directly atop, without direct physical contact, of the BWPT conversion module, e.g., antenna coils, corresponding to battery pack 200. The power transfer between power transfer assembly 350 and the BWPT conversion module corresponding to battery pack 200 is described further below with reference to FIG. 4A.

To remove battery pack 200, gate 225 may be opened, withdrawn, or otherwise removed to allow the machinery, e.g., forklift, to abut with the bottom surface of battery pack 200 via spaces created by risers 217, and slide battery pack 200 outward along rails 330A and 330B.

The embodiments of FIGS. 3A and 3B are not limited to the bottom surface of a chassis, as other non-limiting example embodiments contemplate battery pack 200 being disposed on an inner surface, *i.e.,* flooring, of a container or on a top surface of the interior of a container.

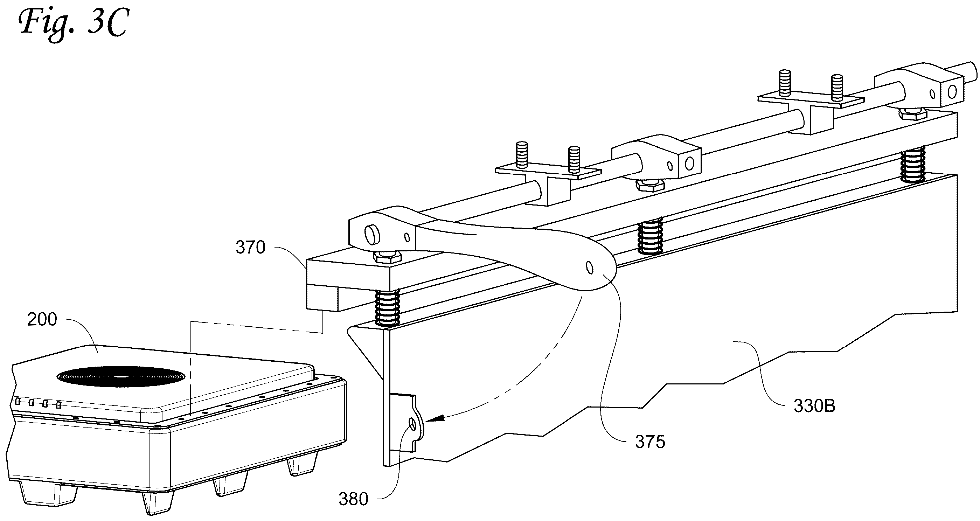

FIG. 3C shows an example of secure clamping of battery pack 200 within the accommodating space created between rails 330A and 330B.

In accordance with at least one non-limiting example of battery pack 200 being securely clamped between parallel rails 330A and 330B, a damper 370 may be affixed to rails 330A and 330B, and clamp 375 is pivoted downward to engage receptor 380 to hold clamp 375 in place, thus compressing battery rails 330A and 330B to secure it in place. The embodiment of FIG. 3C is a non-limiting example, as myriad other means and methods of fastening battery pack 200 securely in place are contemplated within the scope of the description and recitation herein. For example, to ensure proper alignment of the BWPT conversion modules corresponding to both the chassis and battery pack 200, fasteners, pins, spring-loaded roller, latch, *etc.,* may be deployed within the accommodating space created between parallel rails 330A and 330B or on the rails themselves.

FIG. 4A shows a schematic diagram of a system by which at least one non-limiting example of a transportation-related replaceable battery may be implemented, e.g., showing power flow in a trailer-mounted mode. As depicted, system 400 includes replaceable wireless battery pack 405, into which battery 410 is inserted or otherwise housed, and that includes WPT conversion module 415. WPT conversion module 415 includes power converter 420, and antenna 425 is attached to WPT conversion module 415. System 400 also includes power transfer assembly 430, which includes antenna 435 and WPT conversion module 440. WPT conversion module 440 includes power converter 445. System 400 also includes TCS 450, which at least partially includes bus 455, which is configured to conductively power one or more of compressor drive 470; defrost/heaters 475; and fans and blowers 480. Also attached to bus 455 are power distribution unit 460 and TCS buffer battery pack 465. Power distribution unit 460 may receive power from onboard charger 485, which includes power converter 490 that receives power via AC charger plug 495; or power distribution unit 460 may receive power via DC charger plug 497.

Wireless battery pack 405, as described above regarding battery pack 200, is physically configured to house battery 410 and is designed or otherwise configured to be removably attached to a chassis of a transport unit. For at least some of the non-limiting embodiments described and recited herein, battery pack 405 has an opening by which a chargeable battery is inserted therein. The openings include, but are not limited to, a top lid opening, a side panel opening, a side-hinged opening, *etc.* Battery pack 405 is lightweight yet durable, and therefore is manufactured with components from, *e.g.,* CFRP and/or GFRP to provide sustainable rigidness and sturdiness, considering the elements and conditions to which battery pack 405 is likely to be exposed when inserted or attached to the transport unit chassis. In at least one embodiment, battery pack 405 is designed or otherwise configured to house battery 410, BWPT conversion module 415, power converter 420, and antenna 425, all of which may be provided separately or in combination together in various permutations.

Battery 410, as described and recited herein, is a battery that is permanently housed within battery pack 405. Further, wireless battery pack 405 is designed and/or configured to receive and transmit power without utilizing physical connectors, but rather by utilizing inductive coupling between coils of wire, which may be referred to as an antenna. Wireless battery pack 405, as described and recited herein, may be implemented as part of a wireless power transfer (WPT) system that includes wireless information transfer (WIT) to continuously send to battery manager 407 a battery status, e.g., charging phase, voltage, and required power, to adjust control parameters of electronic components on the transmitting and receiving ends in real time.

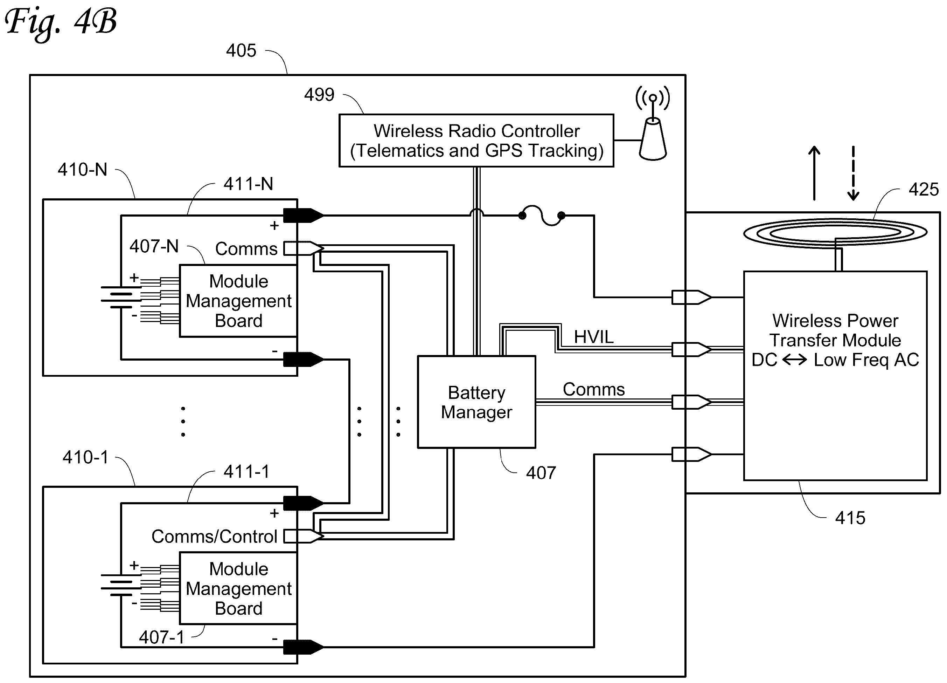

As shown in FIG. 4B, another non-limiting example embodiment of battery pack 405 includes WPT conversion module 415, which itself includes, as shown in FIG. 4A, power converter 420, and antenna 425 is attached to WPT conversion module 415. In the example embodiment of FIG. 4B, there are 1 to N, *e.g.,* 26, modules of battery 410-1 to 410-N that are designed and/or configured to transmit and receive power without utilizing physical connectors, but rather by utilizing antenna 425. Each module of battery 410 may have a corresponding module management board 407-1 to 407-N to communicate via a corresponding communication port 411-1 to 411-N with BMS 407. Battery 410, as described and recited herein, may be implemented as part of a wireless power transfer (WPT) system that includes wireless radio controller 499 to send signals to other devices in the climate-controlled transport system, GPS tracker, fleet tracker, *etc.*

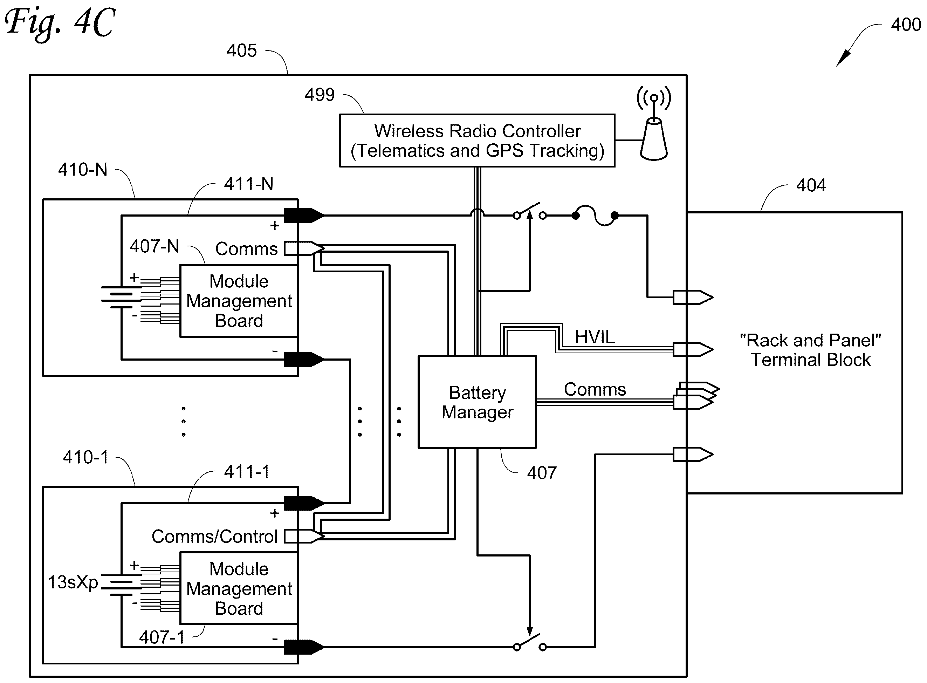

FIG. 4C shows a schematic diagram of a non-limiting example embodiment of a replaceable battery that may be used in correspondence with a transport unit that is configured to transfer power conductively. As described prior regarding FIG. 2B, a battery pack 200b includes the rack and panel power terminal 250 so that, in accordance with one non-limiting example implementation, the battery pack 200b may be conductively charged by receiving power from a charging shelf array into power terminal 250. In addition, or in the alternative, battery pack 200 may be conductively discharged and charged on the trailer, *e.g.* if the trailer pulls up to a standard electric vehicle charger while the replaceable battery is still installed.

The battery pack 405 in FIG. 4C includes a power terminal block 404, which is an insulated connectivity port, by which battery pack 405 is conductively connected to the charging shelf array. Otherwise, as with the example embodiments of FIGS. 4A and 4B, battery pack 405 in FIG. 4C includes 1 to N, *e.g.,* 26, modules of battery 410-1 to 410-N that are designed and/or configured to receive and transmit power utilizing conductive connectors to terminal block 404. Each module of battery 410 may have a corresponding module management board 407-1 to 407-N to communicate via a corresponding communication port 411-1 to 411-N with BMS 407. Wireless radio controller 499 continuously communicates with the BMS 407 to provide and receive important changes in system status, e.g., charging phase, voltage, and required power, to adjust control parameters of electronic components on the transmitting and receiving ends in real time. Wireless radio controller 499 also continuously sends to an external system, *e.g.,* TRU, trailer, charger, cloud server, *etc.*

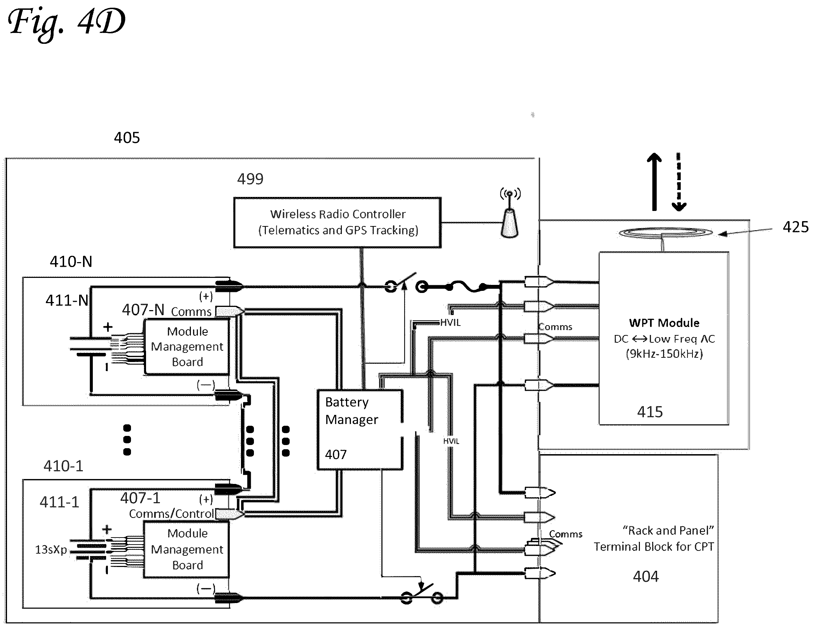

FIG. 4D shows a schematic diagram of a composite of the example embodiments of FIGS. 4B and 4C. That is, the non-limiting example embodiment of FIG. 4D provides a combined wireless and conductive power transfer option. The combination embodiment of FIG. 4D provides a high-level of flexibility regarding battery charging and discharging. The battery may be charged and/or discharged wirelessly via antenna 425 or the battery may be charged and/or discharged via connector port 404. Though not limiting, the example embodiment of FIG. 4D may be implemented with conductive charging in particular, since charging with a conductive interface provides a higher level of power transfer efficiency (which may be required by certain local regulations) than by wireless power transfer.

For FIGS. 4A - 4D, battery management system (BMS) 407 refers to a component of battery pack 405 that determines battery pack status using information from module management boards 407-1 to 407-N and other components within battery pack 405. BMS 407 communicates the battery pack status to the whole system 400, e.g., remaining state of charge, state of health, fault status, internal temperature, charging phase, voltage, and any charge or discharge power limits. Thus, a user or manager of system 400 is able to determine, based on the indicated battery pack status, whether swappable battery pack 405, including battery 410, should be replaced on the chassis or if the battery 410 housed within battery pack 405 should be replaced. That is, if the status provided by BMS 407 indicates that the current condition of battery 410 may not be sufficient to meet present and/or future conditioning needs for the climate-controlled space, the user or manager of system 400 is able to swap, or replace, battery pack 405 or, at least, battery 410. BMS 407 may be deployed as an integrated HMI (Human Machine Interface) that allows for quick visual identification of state of charge (SoC), charging status, or basic diagnostic messages. In a non-limiting example, this same information might be communicated over a cellular network to a remote user or manager of system 400. Further, BMS 407 is to serve as an electronic safety circuit for battery 410 housed within battery pack 405. For example, BMS 407 monitors whether the battery is allowed to charge or discharge based on its voltage, temperature, current, state of health, state of charge, faults, *etc.,* and further such information for the benefit of an operator or equipment to which the battery pack is connected.

BWPT conversion module 415, as described and recited herein, is a bidirectional WPT conversion module that converts the DC power stored within wireless battery pack 405 to AC power for wireless transmission to power transfer assembly 430, via antenna 425. As BWPT may be expensive in terms of cost per watt or physical space per watt, at least some of the embodiments described and recited herein contemplate using wireless power from one or more of the wireless battery packs to source the lower power needs of the CCU, e.g., maintaining temperature, while the inner-TCS buffer battery pack 465 (described below) provides for higher power charge and discharge needs, e.g., performing major temperature pulldowns or heating operations

As referenced herein with regard to the non-limiting example embodiments, low-frequency, within potential frequency ranges for wireless high power transfer to battery electric vehicles, includes a frequency band from 9kHz to 150kHz.

As is known, the central functional units of a BWPT system include a bi-directional DC/AC converter, *i.e.,* inverter; and coils. As depicted and further described herein, power converter 420 performs the AC/DC conversion and DC/AC conversion functions. Though illustrated and referenced as a single unit, power converter 420 is not so limited in the non-limiting example embodiments described and recited herein. That is, power converter 420 may include a separate and distinct AC/DC converter, DC/AC converter, *i.e.,* inverter, and antenna, or a combination of two or more of such components.

Power converter 420, as described and recited herein in accordance with at least one non-limiting example embodiment, refers to a bidirectional DC-to-AC converter, *i.e.,* an inverter, to convert the DC current from battery 410 to AC current to induce wireless transmission of power to wireless power transfer assembly 430 and likewise to convert the induced AC current received from wireless power transfer assembly 430 to DC current for the battery 410.

Antenna 425, as described and recited herein in accordance with at least one non-limiting example embodiment, refers to the coiled conductor via which power converter 420 induces wireless power to wireless power transfer assembly 430 and receives induced wireless power from wireless power transfer assembly 430. Antenna 425 also exchanges data with power transfer assembly 430 for transmission to and from the BMS 407. Further, the coils may be tuned and designed for a resonance to enhance power flow via the changing magnetic field.

Similarly, antenna 435, as described and recited herein, refers to coils of wire via which power transfer assembly 430, without physical connectors, receives the converted AC power from wireless battery pack 405.

Power transfer assembly 430, as described and recited herein, and as also referenced as power transfer assembly 350 in FIGS. 3A and 3B, refers to one or more power transfer assemblies disposed on the chassis, *i.e.,* vehicle-side, to regulate the transfer of power and/or data between battery pack 405 and TCS 450. In at least one embodiment, power transfer assembly 430 includes BWPT conversion module 445, power converter 440, and antenna 435, all of which may be provided separately or in combination together in various permutations.

BWPT conversion module 445, as described and recited herein, is a bidirectional WPT conversion module that converts the low-frequency AC power received, via antenna 425, from battery pack 405 to DC power for transmission, typically conductively, to TCS 450.

Power converter 440 as described and recited herein in accordance with at least one non-limiting example embodiment, refers to an AC-to-DC converter to convert the received AC current from battery pack 405 to DC current for conductive transmission to TCS 450.

TCS 450, as described and recited herein, refers to a transport climate control system for a climate-controlled transport unit that includes a climate-controlled space. In accordance with at least some of the non-limiting example embodiments described and recited herein, TCS 450 includes, but is in no way limited to, power distribution unit 460, TCS buffer battery pack, compressor drive 470, C bus 455. In accordance with the non-limiting example embodiments, compressor drive 470, defrost heaters 475, and fans/blowers 480 may be regarded as TCS-related components that have lower power energy needs that may be met by power provided by battery 410.

Power distribution unit 460, as described and recited herein, is a load center corresponding to TCS 450 that is provided to distribute power to, e.g., compressor drive 470, defrost/heaters 475, and fans and blowers 480, and other low-power consuming electrical components corresponding to TCS 450 based on programmatic electronic control therefore. Power distribution unit 460 is provided and/or configured to facilitate DC power received from power transfer assembly 430 as well as DC power stored in TCS buffer battery pack 465 and direct power from either source to the aforementioned low-power consuming electrical components corresponding to TCS 450.

In accordance with at least some of the non-limiting example embodiments described and recited herein, power distribution unit 460 is a device, e.g., fuses, resistors, power relays in series, to stabilize and distribute DC voltage received from transfer assembly 430. Practically, power distribution unit 460 also stabilizes and distributes DC voltage received from onboard charger 485, which includes power converter 490 that receives power via AC charger plug 495 or from power distribution unit 460 that receives power via DC charger plug 497. That is, PDU 460 charges up DC bus 455 through a resistive element before full main power is connected and also fully depletes DC buss 455, via an active discharge circuit, by shorting DC bus 455 to negative DC bus using a resistive element.

TCS buffer battery pack 465, as described and recited herein, refers to a buffer battery provided for TCS 450 to handle high-power charge/discharge and to provide transient holdover power when power from battery pack 405 is absent or below a threshold level, *e.g.,* when one or more of battery pack 405 has been removed for charging or if the charge therefore is less than a requisite state of charge to provide power to the TCS. Scenarios in which power from battery pack 405 is absent include the power from battery 410, via battery pack 405, falling below the aforementioned threshold level; or the power from battery 410, via battery pack 405, being otherwise insufficient for the components conductively connected to DC bus 455.

That is, TCS buffer battery pack 465 provides and absorbs, as needed, high currents that may be found in TCS 450 that are higher than what could be transferred wirelessly, including those from AC charger plug 495 and/or DC charger plug 497. For example, in accordance with at least one example scenario, high discharge currents are utilized to pull down the temperature in a container or if the chassis includes an e-Axle, since axle-generated power pushes higher charging currents into TCS 450.

Further, in accordance with at least one non-limiting example embodiment, TCS buffer battery pack 465 may be mounted external to the TCS.

Compressor drive 470, defrost/heater(s) 475, and fan(s) and blower(s) 480, as referenced herein, are low-power consuming electrical components corresponding to TCS 450 that may be powered by power received from battery 410, via power transfer assembly 430, and regulated by power distribution unit 460.

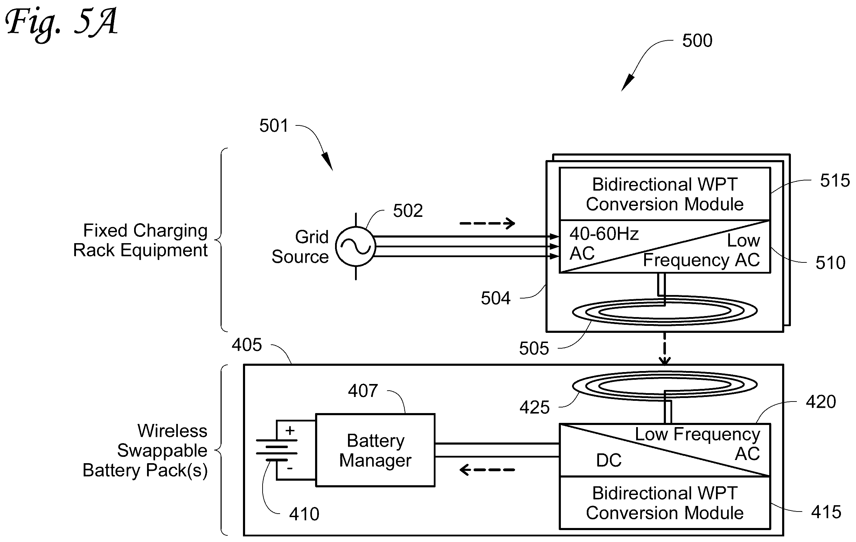

FIG. 5A shows a schematic diagram of system 500 by which charging of at least one non-limiting example of a transportation-related replaceable battery may be implemented, *i.e.,* power flow in a charging rack. As depicted, system 500 includes replaceable battery pack 405, into which battery 410 is inserted or otherwise housed, and that includes WPT conversion module 415. System 500 also includes fixed charging rack equipment 501, as swappable battery pack 405 can be machine-delivered into a charging shelf array that facilitates simultaneous charge scheduling of multiple rechargeable battery packs 405.

As in the illustration and description of FIG. 4A, in FIG. 5A, WPT conversion module 415 includes power converter 420, and antenna 425 is attached to WPT conversion module 415. System 400 also includes power transfer assembly 430, which includes antenna 435 and WPT conversion module 440. WPT conversion module 440 includes power converter 445. System 500 further includes, but is not limited to, fixed charging rack 501, which may be regarded as a mounting structure on which multiple wireless batteries, e.g., battery 410, are charged.

In accordance with deployment of at least some of the example embodiments described herein, fixed charging rack 501 may be located in food distribution warehouses or other facilities in which the sustainability and/or preservation of perishable items within transport containers or units is dependent on rapid and efficient charging of power systems for transport climate control systems. Of course, deployment is not limited to such environments, particularly as wireless batteries increase in usage for cargo transport and passenger transportation.

Grid source 502 is a power source, e.g., electric grid or even AC generator, provided in the aforementioned facilities in which fixed charging rack 501 is deployed. In accordance with the embodiments described and recited herein, power from grid source 502 is conductively received by power transfer assembly 504, which includes BWPT conversion module 515, power converter 510, and antenna 505, all of which may be provided separately or in combination together in various permutations.

**BWPT** conversion module 515, as deployed on fixed charging rack 501, is a bidirectional WPT conversion module having power converter 510 that converts the grid-sourced AC power from grid source 502 to low-frequency AC power for wireless transmission to wireless battery pack 405, via antenna 425.

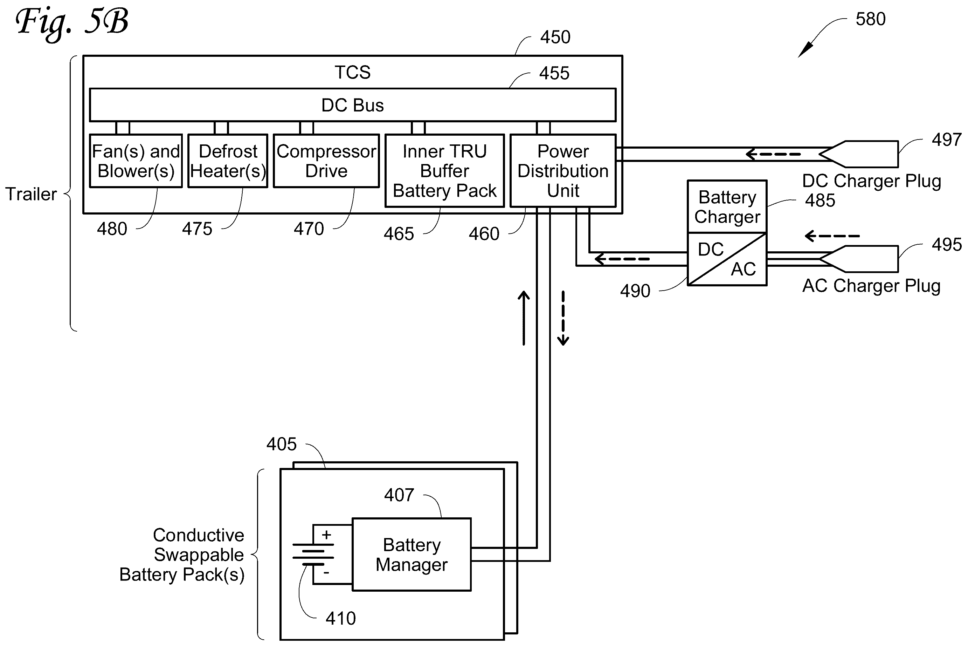

FIG. 5B shows a schematic diagram of a system by which charging of at least one other non-limiting example of a transportation-related replaceable battery may be implemented., *i.e.,* power flow in trailer-mounted mode, which is a conductive implementation. As depicted, system 580 includes replaceable battery pack 405 which is conductively connected to TCS 450, which at least partially includes bus 455, which is configured to conductively power one or more of compressor drive 470; defrost/heaters 475; and fans and blowers 480. Also attached to bus 455 are power distribution unit 460 and TCS buffer battery pack 465. In accordance with the non-limiting example embodiment of FIG. 5B, power distribution unit may further receive power from battery pack 405- Power distribution unit 460 may receive power from onboard charger 485, which includes power converter 490 that receives power via AC charger plug 495; or power distribution unit 460 may receive power via DC charger plug 497

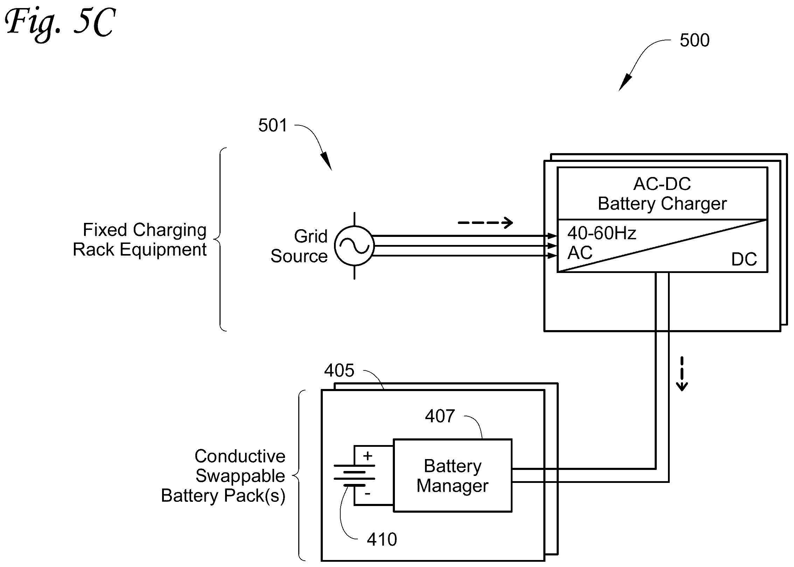

FIG. 5C shows a schematic diagram of a system by which charging of yet another non-limiting example of a transportation-related replaceable battery may be implemented, *i.e.,* power flow in a charging rack. As depicted, system 500 includes replaceable battery pack 405-. System 500 also includes fixed charging rack equipment 501, as swappable battery pack 405 can be machine-delivered into a charging shelf array that facilitates simultaneous charge scheduling of multiple rechargeable battery packs 405 during the charging process. In accordance with the non-limiting example embodiment of FIG. 5C, battery pack 405, may be conductively connected to a AC-DC battery charger corresponding to the fixed charging rack equipment.

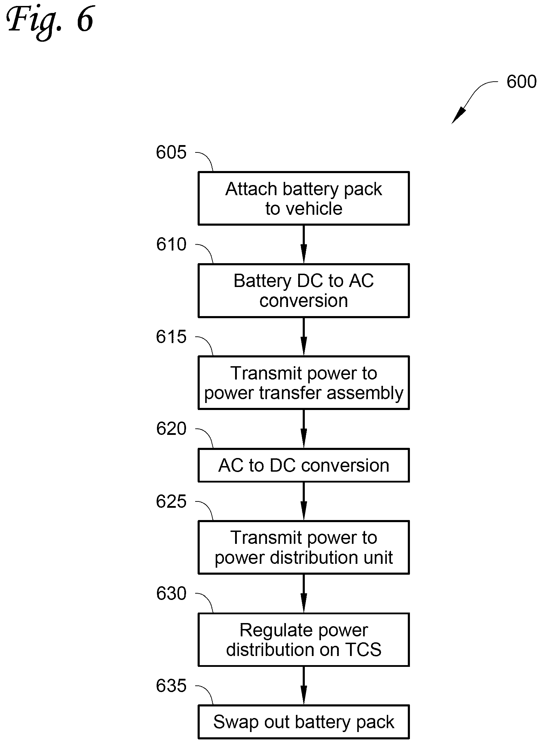

FIG. 6 shows a flowchart of a non-limiting example methodology for implementing transportation-related replaceable batteries, in accordance with embodiments described and recited herein. As depicted, flow 600 includes blocks executed by components of systems 400 or 500, and/or external machinery. But flow 600 is not limited to such blocks, as obvious modifications may be made by re-ordering two or more of the blocks described here, eliminating at least one of the blocks, adding further blocks, substituting blocks, *etc.* The description begins with block 605.

Further, the scenarios or implementations by which flow 600 may be executed are plentiful, none of which are limiting of the scope of the embodiments described and recited herein. For example, flow 600 may be implemented in accordance with the charging of battery pack 405 from the grid via BWPT conversion module 415 while still attached to the vehicle; charging from the grid via BWPT conversion module in a charging rack after removal of battery pack 405 from the vehicle; swapping a charged battery pack 405 from one vehicle to another vehicle; or being connected to a vehicle with batteries that are at different voltages.

Block 605 (attach battery pack) includes a battery pack being mechanically inserted, attached, or mounted on a chassis for a corresponding TCS or transport unit. As a non-limiting example, a forklift may be utilized for the operation of block 605.

Prior to 610, a communication handshake between BWPT conversion module 415, corresponding to battery pack 405 and power transfer assembly 430 is to be established. Without an agreement implied by a handshake, it is not clear that conditions are acceptable or appropriate for power transfer. For example, foreign object detection is to be completed prior to power transfer.

Block 610 (DC to AC conversion) includes BWPT conversion module 415, corresponding to battery pack 405, converting DC power stored within wireless battery 410 to AC power for wireless transmission to power transfer assembly 430, via antenna 425. At least some of the embodiments described and recited herein contemplate converted AC power to be of low-frequency for lower power energy needs in TCS 450.

Block 615 (transmit power to power transfer assembly) includes antenna 425, corresponding to battery pack 405, transmitting converted AC power to power transfer assembly 430, which receives the converted AC power via antenna 435.

Block 620 (AC to DC conversion) includes BWPT conversion module 445, corresponding to power transfer assembly 430, converting the received low-frequency AC power to DC power.

Block 625 (transmit power to power distribution unit) includes power transfer assembly 430 conductively transmitting the converted DC power to TCS 450.

Block 630 (regulate power distribution for TCS) includes power distribution unit 460 corresponding to TCS 450, regulating power to, e.g., compressor drive 470, defrost/heaters 475, and fans and blowers 480, and other low-power consuming electrical components corresponding to TCS 450. Power distribution unit 460 is provided and/or configured to regulate DC power received from power transfer assembly 430 as well as DC power stored in TCS buffer battery pack 465 and direct power from either source to the aforementioned low-power consuming electrical components corresponding to TCS 450.

Block 635 (swap out battery pack) includes battery pack 405 being swapped out or replaced when power from battery 410 is below a threshold level or is otherwise insufficient for the components corresponding to TCS 450.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

### ASPECTS

Aspect 1. A power system for powering a transport climate control system (TCS), comprising:
a wireless battery pack configured to house a battery, the wireless battery pack being removably attached to a chassis of the transport unit;
a wireless power transfer assembly configured to:
   receive wirelessly induced AC power from the battery pack, and
   convert the received AC power to DC power for distribution; and
a power distribution unit corresponding to the TCS configured to:
   conductively receive DC power from the wireless power transfer assembly, and
   conductively transmits the DC power to an electrical component of the TCS.

Aspect 2. The power system of Aspect 1, wherein battery pack comprises:
a bidirectional wireless power transfer (BWPT) module configured to convert DC power from a rechargeable battery to AC or convert wirelessly induced AC power to DC power for the battery; and
an antenna configured conduct AC power in one direction to induce outgoing wireless power and to receive induced wireless power such that AC power may be conducted in the reverse direction.

Aspect 3. The power system of either of Aspects 1 or 2, wherein the wireless power transfer assembly of the transport unit comprises:
an antenna configured to receive wirelessly induced power from the battery pack; and
a bidirectional wireless power transfer (BWPT) module configured to convert the wirelessly induced power received to DC power for transmission to the power distribution unit and convert DC power from the power distribution unit to AC power that can induce wireless power transfer to a wireless battery pack.

Aspect 4. The power system of any one of Aspects 1 - 3, wherein the TCS comprises:
the power distribution unit that is further configured to distribute DC power from the wireless power transfer assemblies between electrical components of the TCS and charging connections; and
a TCS buffer battery pack.

Aspect 5. The power system of any one of Aspects 1 - 4, wherein the power distribution unit is configured to distribute DC power between the wireless power transfer assemblies and the electrical components of the TCS and charging connections.

Aspect 6. The power system of any one of Aspects 1 -6, wherein the power distribution unit is configured to distribute DC power from the TCS battery pack to electrical components corresponding to the TCS when a detected status of the wireless battery pack is less than a threshold value needed to operate the TCS.

Aspect 7. The power system of any one of Aspects 1 - 6, wherein the power distribution unit is configured to distribute DC power from the TCS buffer battery pack to electrical components when the wireless battery pack is electrically or physically absent from the TCS.Aspect 8. The power system of any one of Aspects 1 - 7, wherein the battery pack is removably attached and detached from the chassis by a forklift.

Aspect 9. The power system of any one of Aspects 1 - 8, wherein the power distribution unit is further configured to receive DC power directly from a DC charger.

Aspect 10. The power system of any one of Aspects 1 - 9, wherein the power distribution unit is further configured to receive DC power from a battery charger.

Aspect 11. The power system of any one of Aspects 1 - 8, wherein the wireless battery pack is conductively charged in a power system that is separate from the transport unit.

Aspect 12. The power system of any one of Aspects 1 - 9, wherein the power system is disposed in a loading/unloading facility for climate control transport units.

Aspect 13. The power system of any one of Aspects 1 - 10, wherein the wireless battery pack is conductively charged in a stationary power system that accommodates charging of one or multiple battery packs that are capable of being charged simultaneously.

Aspect 14. A method implemented in connection with a transport climate control system (TCS), comprising:
mechanically attaching a replaceable wireless battery pack to a transport unit;
converting DC power from a battery disposed within the wireless battery pack to AC power;
the AC power inducing wireless power transfer from the wireless battery pack to a power transfer assembly on the transport unit;
converting the induced AC power to DC power in the power transfer assembly of the transport unit;
transferring the DC power from the transport unit's power transfer assembly to a power distribution unit corresponding to the TCS;
conductively receiving the DC power transferred from the transport unit's power transfer assembly at the power distribution unit; and
transferring the DC power to the electrical components corresponding to the TCS.

Aspect 15. The method of Aspect 14, wherein the converting of the DC power from the battery disposed within the wireless battery pack to AC power is performed by a bidirectional wireless power transfer (BWPT) conversion module corresponding to the battery pack.

Aspect 16. The method of either of Aspects 14 or 15, wherein the AC power induces wireless power transfer using an antenna connected to the wireless battery pack while coupled to an antenna connected to the power transfer assembly of the transport unit.

Aspect 17. The method of any one of Aspects 14 - 16, wherein the converting of the received AC power to DC power in the power transfer assembly of the battery pack is performed by a bidirectional wireless power transfer (BWPT) conversion module corresponding to the power transfer assembly of the battery pack.

Aspect 18. The method of any one of Aspects 14 - 17, further comprising:
the power distribution unit distributing the DC power received from the power transfer assembly and DC power from a buffer battery pack that is conductively connected to the electrical components of the TCS.

Aspect 19. The method of Aspect 18, wherein the distributing includes conducting the DC power received from the wireless power transfer assembly of the transport unit to electrical components of the TCS.

Aspect 20. The method of either one of Aspects 18 or 19, wherein the distributing includes conducting DC power from the TCS battery pack to electrical components of the TCS for higher power needs.

Aspect 21. The method of any one of Aspects 18 - 20, wherein the distributing includes conducting DC power from the TCS battery pack to electrical components corresponding to a transportation climate control system (TCS) when a detected status of the wireless battery is less than a threshold value needed to operate the TCS.

Aspect 22. The method of any one of Aspects 18 - 21, wherein the distributing includes conducting DC power from the TCS battery pack to electrical components corresponding to a transportation climate control system (TCS) when the wireless battery pack is physically or electrically absent from the TCS.

Aspect 23. The method of any one of Aspects 18 - 22, further comprising:
mechanically removing the wireless battery pack from the transport unit; and
mechanically attaching another wireless battery pack to the transport unit.

Aspect 24. The method of Aspect 23, wherein the mechanically attaching comprises clamping the inserted battery pack such that an antenna attached to the inserted battery pack aligns with an antenna attached to the power transfer assembly of the transport unit.

Aspect 25. The method of any of Aspects 14 - 24, wherein the battery pack is removably attached and detached from the transport unit by a forklift.

Aspect 26. The method of any one of Aspects 14 - 25, wherein the power distribution unit is further configured to receive DC power directly from a DC charger.

Aspect 27. The method of any one of Aspects 14 - 26, wherein the power distribution unit is further configured to receive DC power from an onboard AC/DC battery charger.

Aspect 28. The method of any one of Aspects 14 - 27, wherein the wireless battery pack is conductively charged in a power system that is separate from the transport unit.

Aspect 29. The method of any one of Aspects 14 - 28, wherein the method is performed in a loading/unloading facility for multiple transport units.

Aspect 30. The method of any one of Aspects 14 - 29, wherein the wireless battery pack is conductively charged in a stationary power system that accommodates charging of one or multiple interchangeable wireless battery packs that are capable of being charged simultaneously.

Aspect 31. The method of any one of Aspects 14 - 30, wherein the wireless battery pack is charged from an onboard battery charger.

## Claims

1. A power system for powering a transport climate control system (TCS) that is configured to provide climate control within a climate-controlled space of a transport unit, comprising:
a wireless battery pack configured to house a battery, the wireless battery pack being removably attached to a chassis of the transport unit;
a wireless power transfer assembly configured to:
receive wirelessly induced AC power from the battery pack, and
convert the received AC power to DC power for distribution; and
a power distribution unit corresponding to the TCS configured to:
conductively receive DC power from the wireless power transfer assembly, and
conductively distributes the DC power to an electrical component of the TCS.

2. The power system of Claim 1, wherein the battery pack comprises:
a bidirectional wireless power transfer (BWPT) module configured to convert DC power from a rechargeable battery to AC; and
an antenna configured to conduct the AC power to the wireless power transfer assembly.

3. The power system of any one of Claims 1 and 2, wherein the wireless power transfer assembly comprises:
an antenna configured to receive the wirelessly induced power from the battery pack;
a bidirectional wireless power transfer (BWPT) module configured to convert the received wirelessly induced power to DC power for transmission to the power distribution unit; and
convert the DC power from the power distribution unit to AC power that induces wireless power transfer to a wireless battery pack.

4. The power system of any one of Claims 1-3, wherein the TCS comprises:
the power distribution unit that is further configured to distribute the DC power from the wireless power transfer assemblies between electrical components of the TCS and charging connections; and
a TCS buffer battery pack.

5. The power system of any preceding claim, wherein the power distribution unit is configured to distribute the DC power between the wireless power transfer assemblies and the electrical components of the TCS and the charging connections.

6. The power system of any preceding claim, wherein the power distribution unit is configured to distribute the DC power from the TCS battery pack to electrical components of the TCS when a detected status of the wireless battery pack is less than a threshold value.

7. The power system of any preceding claim, wherein the power distribution unit is configured to distribute the DC power from the TCS buffer battery pack to electrical component when the wireless battery pack is absent from the TCS.

8. The power system of any preceding claim, wherein the battery pack is removably attached and detached from the chassis by a forklift.

9. A method implemented in connection with a transport climate control system (TCS), comprising:
attaching a replaceable wireless battery pack to a transport unit;
converting DC power from a battery disposed within a wireless battery pack to low frequency AC power;
inducing wireless power transfer from the wireless battery pack to a power transfer assembly on the transport unit;
converting the induced AC power to DC power in the power transfer assembly of the transport unit;
transferring the DC power from the power transfer assembly to a power distribution unit corresponding to the TCS;
conductively receiving the DC power transferred from the power transfer assembly at the power distribution unit; and
transferring the DC power to electrical components corresponding to the TCS.

10. The method of Claim 9, wherein the converting of the DC power from the battery disposed within the wireless battery pack to AC power is performed by a bidirectional wireless power transfer (BWPT) conversion module corresponding to the battery pack.

11. The method of any one of Claims 9 and 10, wherein the AC power induces wireless power transfer using an antenna connected to the wireless battery pack and coupled to an antenna connected to the power transfer assembly of the transport unit.

12. The method of any one of Claims 9 to 11, wherein the converting of the received AC power to DC power in the power transfer assembly of the battery pack is performed by a bidirectional wireless power transfer (BWPT) conversion module corresponding to the power transfer assembly of the battery pack.

13. The method of any one of Claims 9 to 12, further comprising:
the power distribution unit distributing the DC power received from the power transfer assembly and DC power from a buffer battery pack that is conductively connected to the electrical components of the TCS, and optionally
wherein the distributing includes conducting the DC power received from the wireless power transfer assembly of the transport unit to electrical components of the TCS, and/or
wherein the distributing includes conducting DC power from the TCS battery pack to electrical components of the TCS for higher power needs, and/or
wherein the distributing includes conducting DC power from the TCS battery pack to electrical components corresponding to a TCS when a detected status of the wireless battery pack is less than a threshold value for operation of the TCS, and/or
wherein the distributing includes conducting DC power from the TCS battery pack to electrical components corresponding to a TCS when the wireless battery pack is absent from the TCS, and/or
wherein the regulating includes transferring DC power from the inner-TCS battery pack to electrical components corresponding to a transportation climate control system (TCS) when the wireless battery pack is deactivated.

14. The method of any one of Claims 9 to 13, further comprising:
mechanically removing the wireless battery pack from the transport unit; and
mechanically attaching another wireless battery pack to the transport unit.

15. The method of Claim 14, wherein the mechanically attaching comprises clamping the inserted battery pack such that an antenna attached to the inserted battery pack aligns with an antenna attached to the power transfer assembly of the transport unit.
